# EUROPEAN PATENT APPLICATION

(11) **EP 1 220 553 A1**
(43) Date of publication of application: **03.07.2002**
(21) Application number: 01660252.6
(22) Date of filing: 27.12.2001
(51) Int. Cl.: H04Q 7/22, H04Q 7/38

(54) **Method for transmitting a location-based message, a message transmission system and a wireless communication device**

(30) Priority: 28.12.2000 FI 20002876
(71) Applicant: Nokia Corporation, 02150 Espoo (FI)
(72) Inventor: Vataja, Timo, 33210 Tampere (FI)
(74) Representative: Pursiainen, Timo Pekka

(57) **Abstract**

The invention relates to a method for the transmission of a location-based message (6). In the method at least one recipient (2) is determined for the message, and the message is transmitted from a sender's (1) wireless communication device (3) to a wireless communication device (3') of one or more said recipients (2). The method comprises at least the following steps:
- a positioning step for positioning the sender's wireless communication device (3),
- a range definition step for defining the message transmission range,
- a detection step for detecting whether the recipient of the message is located within the message transmission range, and
- a presentation step, wherein the message is presented in the recipient's wireless communication device (3'), in case said recipient of the message is located within the message transmission range.

## Description

The present invention relates to a method for transmitting a location-based message as presented in the preamble of the appended claim 1. The invention also relates to a system for transmitting a location-based message according to the preamble of the appended claim 16, a message service center according to the preamble of the appended claim 22, a wireless communication device according to the preamble of the appended claim 23, as well as a wireless communication device according to the preamble of the appended claim 24.

Methods have been developed in which a person can, in accordance with his or her current position, search for information on various services, such as restaurants, hotels, service stations etc. located in the vicinity of the person. The person transmits, by using a wireless communication device, a service request message, in which the person has determined what kind of services he or she wishes to be searched, as well the person's current location. Consequently, such pieces of information are searched in the system data base that match the search criteria defined in the search, and the search result is transmitted to the person's wireless communication device. One drawback of this method is that the person must first define his or her location, whereafter the location data is to be added to the search message. Particularly when moving in a strange town, this kind of arrangement can be difficult and even impossible to use.

The US patent 6,049,711 presents a method and apparatus for transmitting location-based information. The apparatus described in the publication is based on the idea that a person sends, for example using a wireless communication device, a service request message in which the type of the location-based service is identified and the service request message is transmitted to the system. In the system, the wireless communication device is positioned. This positioning utilizes several base stations receiving a signal transmitted by the wireless communication device. In the system, the location of the wireless communication device is calculated on the basis of the differences in the reception times of signals. Next, the service request message and the location data of the wireless communication device are transmitted to a data base system where one or more applicable pieces of information are searched. After that, the search result is transmitted to the wireless communication device. Accordingly, in the invention presented in this publication, the user of the wireless communication device determines what kind of location-based information he or she wishes to search. The publication presents also an arrangement, in which the user of the wireless communication device can detect a location of the wireless communication device belonging to another person.

It is an aim of the present invention to provide a new method for transmitting location-based information, and a system for transmitting location-based information, in which system a person can also store location-based information into the system, and this location based-information can later be transmitted to one or several other persons located in the vicinity of the location in question. The invention is based on the idea that the person stores location-based information into the system and determines *inter alia* to whom the information is intended to be transmitted. When the person or the persons, to whom the location-based information is intended to be transmitted, arrives near the location in question, the stored information is transmitted to the person's wireless communication device or the like. More precisely, the method according to the present invention is primarily characterized in what will be presented in the characterizing part of the appended claim 1. The system according to the present invention is primarily characterized in what will be presented in the characterizing part of the appended claim 16. The message service center according to the present invention is primarily characterized in what will be presented in the characterizing part of the appended claim 22. A wireless communication device according to the present invention is primarily characterized in what will be presented in the characterizing part of the appended claim 23. Further, a wireless communication device according to the present invention is primarily characterized in what will be presented in the characterizing part of the appended claim 24.

Considerable advantages are achieved by the present invention compared to methods and systems of prior art. In the system according to the invention, the person can store messages, information, greetings and the like to be transmitted in a location-based manner to other users located simultaneously or later in the same area. The person can for example when visiting a tourist attraction, store information on the sights of the tourist attraction and address this information to one or more wished persons. Accordingly, when one of these persons later arrives to this tourist attraction, he or she can have information on the experiences of an earlier visitor to the attraction, and thus utilize the experiences of this earlier visitor when exploring the tourist attraction. The present invention can be applied also in meeting arrangements, for example in a manner that when a person arrives to a town or a certain location in the town, he or she stores information on this into the system. Moreover, the person defines to whom this information is to be transferred. If the person, to whom the message has been intended to be transmitted arrives nearby, the stored message is transmitted to this person, and it is possible to try to arrange the meeting. The present invention can also be easily applied in the information of general notices, *inter alia* when informing users approaching a site of an accident. Thus, information on the accident can be transmitted faster than by using prior art arrangements. Additionally, when applying the method according to the invention in connection with advertising, the attention of passers-by can be more easily directed to advertisements, and more information can be transmitted compared to a case in which prior art advertising methods are used.

In the following, the invention will be described in more detail with reference to the appended drawings, in which
- Fig. 1: shows the storing step of the method according to a preferred embodiment of the invention,
- Fig. 2: shows the communication step of the method according to a preferred embodiment of the invention,
- Fig. 3: shows the system according to a preferred embodiment of the invention in a reduced block chart,
- Fig. 4: shows a wireless communication device according to a preferred embodiment of the invention in a reduced block chart,
- Fig. 5: shows the system according to a second preferred embodiment of the invention in a reduced block chart, and
- Fig. 6: shows the system according to a third preferred embodiment of the invention in a reduced block chart.

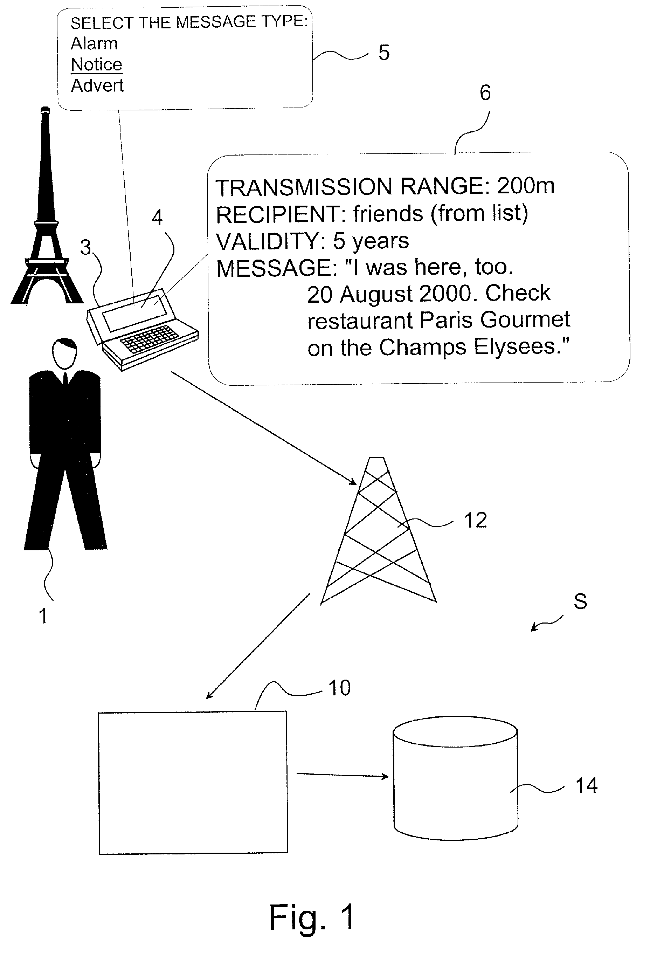

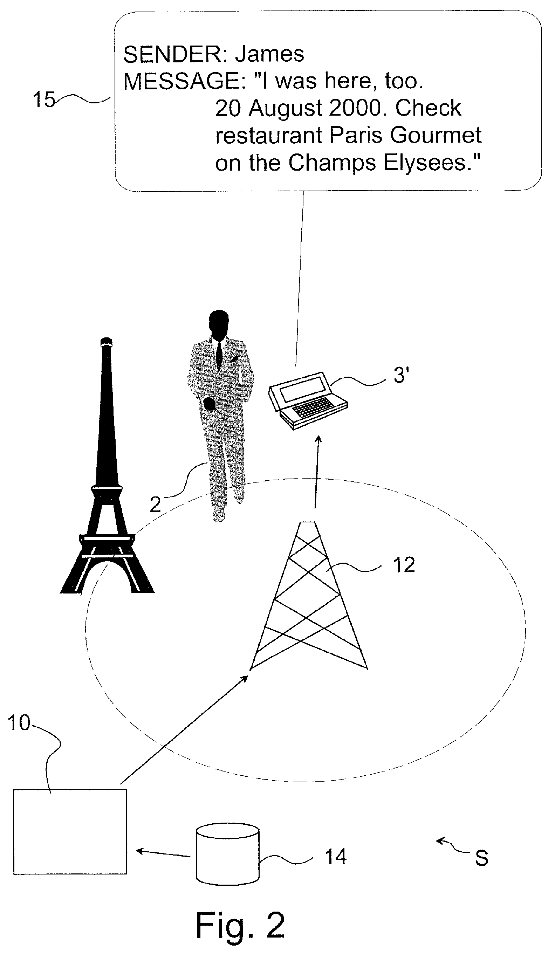

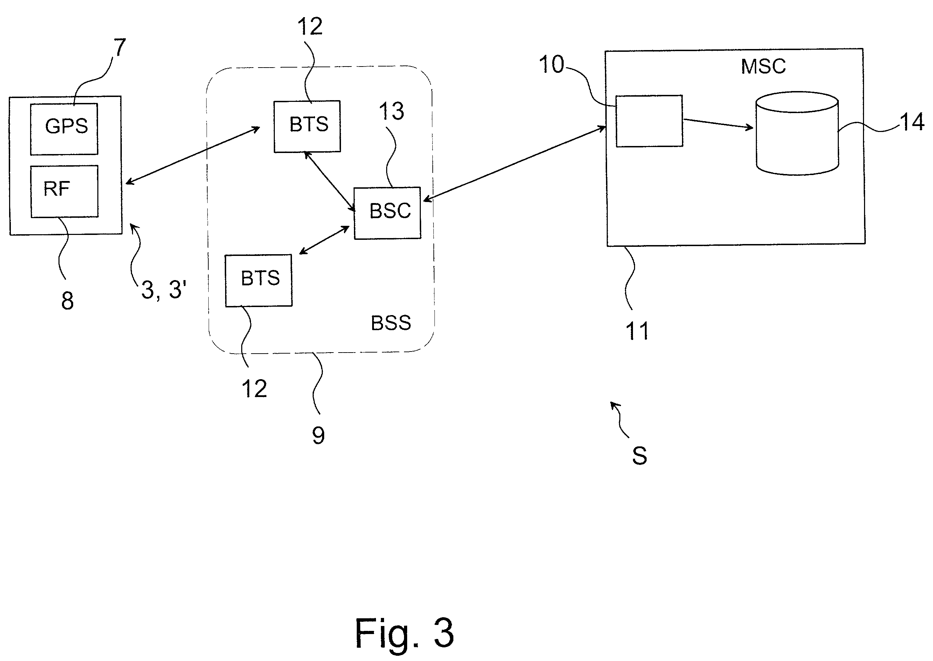

In the following, the operation of the method according to a preferred embodiment of the invention in the system S of Fig. 3 will be described with reference to the exemplified situations shown in Figs. 1 and 2. The first person 1 is for example visiting a location and has explored *inter alia* the sights and the restaurants of the location. Accordingly, this first person wishes to send the information on his or her experiences also to one or more other persons 2 he or she knows. The first person 1 then stores the location-based information into the system. This can be carried out for example in the following manner. The first person 1 selects in a wireless communication device 3, preferably by using a menu function, a transmission function for the location-based message. Thus, on a display 4 of the wireless communication device is shown for example a dialog box for selecting the message type, one example of this dialog box being illustrated in Fig. 1 with reference numeral 5. In this preferred embodiment, the selectable alternatives are alarm, notice, and advertisement, but it is obvious that the invention can be applied also to transmit other kind of information. After selecting an appropriate alternative, the first person 1 writes a short message with the wireless communication device 3. The message can for example contain information that a certain restaurant serves excellent food. Fig. 1 illustrates, with reference numeral 6, a message written by the person 1. In addition to writing the message, the person preferably determines the range within which the message can be transmitted, as well as the recipient of the message. The transmission range is used, in addition to the recipient data, as a criterion in the message transmission, as will be presented later in this description. The recipient can be identified for example by the telephone number of the recipient's wireless communication device 3', or a larger group can be used, for example a list of telephone numbers defined by the person, wherein all the telephone numbers in the list are advantageously transmitted with the message. Even all the persons arriving from a certain country can be defined as recipients. This can be arranged for example in a manner that the identification data used is the country code applied in the international telephone number systems. For example Finland's country code is the number sequence 358. In this case, the message is transmitted to all such wireless communication devices that arrive nearby the location in question and have the country code stored in connection with the message. In this case, the message is transmitted to all such wireless communication devices that arrive nearby the location in question and have the country code stored in connection with the message. Instead of the telephone number the IMSI code (IMSI = International Mobile Subscriber Identification), used in the GSM mobile communication systems, can be used for the identification of the recipient.

After the person has determined all other information necessary for the message transmission except the location data, the person starts sending the message to the system. In the message, there is added the information that the message is intended to be stored into the location-based communication system. This identification data is added preferably automatically in the wireless communication device, or the person can define a certain identifier indicating that the message in question is used in the transmission of location-based information.

In the system of Fig. 3, the wireless communication device 3 further comprises location means 7, such as a GPS receiver by means of which the wireless communication device can be positioned. This location data is added to the message to be transmitted, for example in a co-ordinate form. When the message contains the necessary information, the message is transmitted from the radio part 8 in a manner known as such, for example by using the short message service SMS of a mobile communication system. The message is transmitted from the wireless communication device 3 through the base station subsystem (BSS) 9 to the message service center 10, which is located advantageously in the mobile switching center (MSC) 11. The base station subsystem comprises in this preferred embodiment a base station 12 and a base station controller 13.

In the message service center, the message is stored into a data base 14, which in this preferred embodiment is arranged in connection with the mobile switching center 11, for example in the visitor location register VLR of the mobile switching center. It is obvious that the message can be stored also into another data base. One example that can be mentioned here is the base station, wherein it is not necessary to send the message to the mobile switching center.

Fig. 2 illustrates, in a reduced view, the transmission of a message to the recipient's wireless communication device 3'. After the message has arrived to the message service center 10, the message service center 10 detects whether any such wireless communication devices are logged in to which the target data defined in the message would match. This detection can be performed for example in a manner that the mobile switching center searches whether the visitor location register contains a telephone number, or telephone numbers, which matches the target data and share the same country code with the message, if the message in question is intended for persons coming form a certain country. If data matching with these conditions is found in the visitor location register, such wireless communication devices 3' are positioned next. This can be performed for example in a manner that to the wireless communication device in question a search request is transmitted, in which the wireless communication device is requested to indicate its location. Thus, if the wireless communication device comprises positioning means, such as a GPS receiver, positioning is carried out in the wireless communication device, if necessary, and if the user of the wireless communication device has allowed this. Next, a reply message containing the location data of the wireless communication device is transmitted from the wireless communication device. If the wireless communication device has no positioning means, the wireless communication device transmits information about this to the message service center 10. On the other hand, if the mobile communication system comprises means for defining the location of the wireless communication devices located in the operation range of the mobile communication system, it is not necessary to transmit a separate search request to the wireless communication device. In this case the positioning of the wireless communication device is performed in the mobile communication system for example by using several base stations. For example the base station controller 13 controls three or four base stations 12 to receive a signal transmitted by the wireless communication device and to inform the reception times of the signal to the base station controller 13. On the basis of these times, the base station controller 13 can perform the positioning at a precision adequate in most situations.

The positioning means 7 based on satellite positioning are not applicable for positioning of the wireless communication device 3 in all situations. Satellite signals can be so attenuated, for example indoors, that a satellite positioning cannot be carried out. Thus, it is possible to use advantageously the above-mentioned positioning performed by the mobile communication system and based on base stations. Another applicable possibility is to use a wireless local area network, if there is one in the building, and if the wireless communication device 3 comprises means for connecting to this wireless local area network.

After the positioning the position data is compared to the location data determined in the message in order to determine whether the wireless communication device in question is located inside a range in which the location based message is transmitted. The location-based message contains for example the co-ordinate data and a radius, wherein these pieces of information determine the range within which such a wireless communication device 3' to which the message is transmitted should be. In case one or more such wireless communication devices, to which the target information matches, is found in the determined area, the message is transmitted to such wireless communication devices 3'. The message can be transmitted for example by using said short message service, wherein information about the telephone number of the wireless communication device of the recipient/recipients, as well as the stored message, is defined in the short message. The message is received in the wireless communication device, and the person 2 is informed of the reception of the message. The person 2 can then read the received message, which is exemplified in Fig. 2 with reference number 15 corresponding to the example message 6 of Fig. 1.

If the location-based message is intended to be received by only one or a few users, the message is advantageously removed from the data base 8 after the message has been transmitted to all the defined recipients. Messages intended for many recipients can be stored for a longer period of time. The information as to how long the message will be stored regardless of whether the message has been transmitted can also be added to the messages. As a result, the message service center 10 checks the expiry data of the messages at regular intervals, and removes the expired messages.

The present invention can be applied in a plurality of embodiments. In addition to the above-described embodiment related to travelling, the method can be used for example in meeting arrangements. In this case for example the person 1 visiting a town, sends a message to be stored into the system informing that he has been in the town the particular date. The person 1 determines the person 2 to be the recipient. Let us suppose the person 2 is also simultaneously in the same town, wherein the person 2 receives this stored message. Subsequently, the person 2 writes a message, in which he writes the person 1 to contact him since they are in the same town. Additionally, the person 2 advantageously indicates where he is located at the moment of transmission. The person 2 sends the message to the system, in which it is stored, and the recipient of the message is detected. Because the person 1 is also located within the message transmission range, the message is transmitted to the wireless communication device of the person 1, wherein the person 1 can read the message, and subsequently contact the person 2.

A third embodiment that can be mentioned is a situation in which the person 1 is for example fishing on a river. The person 1 detects that the river in question is also worth recommending for fishing to others, wherein the person 1 writes a message associated with this and stores it into the system. A picture in digital form can also be added to the message, wherein the picture can be transmitted in addition to the message to the recipients of the message and displayed in the recipients' wireless communication devices, if these are capable of displaying pictures. Advantageously all the persons moving in the area can thus be defined as the message target, wherein when a person arrives by the river in question, this message is transmitted to this person's wireless communication device. In such an embodiment it is possible to determine the message to be stored even for many months or years.

The present invention can also be applied for advertising. In this case for example a shopkeeper writes with his or her wireless communication device an advertisement advertising for example the special offers of the week. Next, the message will be transmitted to the system to be stored, and the target group will be preferably all the passers-by. Consequently, this advertisement message can be received by people moving in the vicinity of the shop and having a wireless communication device applicable for the transmission of a message of the system.

Yet another embodiment that can be mentioned is different alarm embodiments, such as informing of accidents. For example in traffic accidents the police transmits a message from the site of the accident to a location-based message service system. The message informs of an accident at a certain location, wherein all such persons approaching the site of the accident in question and having a wireless communication device suitable for receiving the message, can receive this information on the accident, and thus prepare themselves for it well in advance and, if necessary, select a by-pass.

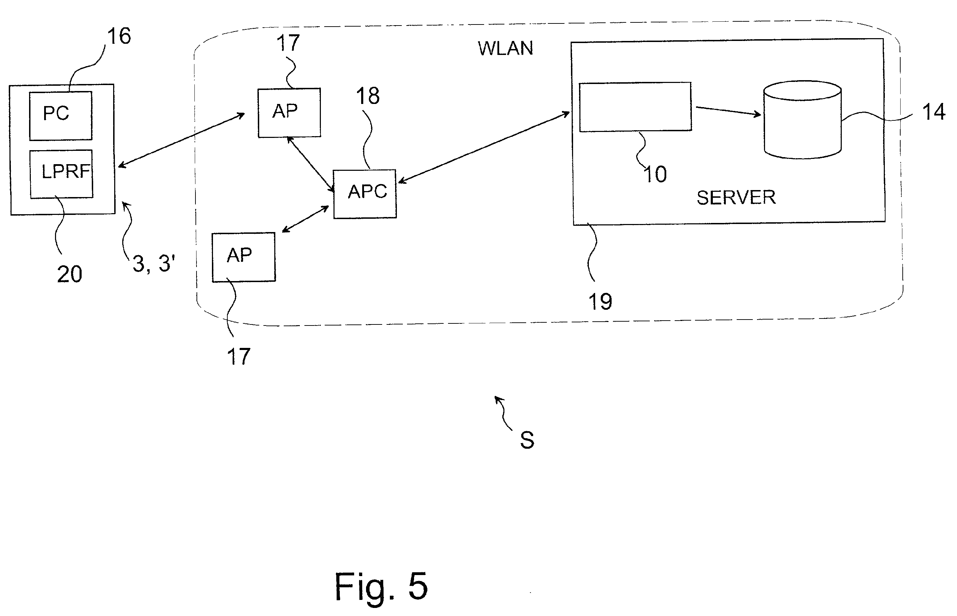

In the following, the communication system S according to a second preferred embodiment of the invention, as illustrated in Fig. 5, will be described. The communication system in accordance with this embodiment comprises a wireless local area network WLAN, in which means 17, 18 are arranged for setting up a communication connection with portable terminals 3. These means 17, 18 comprise for example one or more access points 17 and an access point controller 18. Moreover, the wireless local area network comprises at least one server 19, by means of which the operation of the wireless local area network is controlled in a manner known as such. Further, in the wireless local area network, a message service center 10 has been established, which can be used for storing and transmitting location-based messages according to the invention. Thus, storing means 14 have been arranged to be stored in connection with the message service center 10. Also, it is possible in the system to detect the wireless terminals 3, 3' currently connected with the system, as well as the identification data of these terminals by using the server 19. The storage and transmission of location-based messages can in this system according to the second preferred embodiment of the invention be implemented for example in the following manner. The person 1, such as an employee of a company, writes a message with his or her wireless terminal 3, for example by using the data processing functions 16 of the terminal. In the message it is also determined the recipient or recipients of the message, possibly the validity of the message, and other data associated with the message, such as whether a reply is requested, etc. After the message has been written and the definitions associated therewith have been set, the message is transmitted from the wireless terminal 3 to the wireless local area network. In the wireless local area network the message will be transmitted to the message service center 10, which stores the message into the storing means 14. In addition, the message service center 10 examines whether the recipient is currently logged into the wireless local area network. If the message service center detects that one or more persons determined as recipients of the message are currently logged into the wireless local area network, the message can be transmitted to such a person. Consequently, the information as to whom the message has already been transmitted is also preferably marked in connection with the message storage data. In case the message can be transmitted to all the determined recipients, the message can be removed from the storage means 14 of the message service center.

If the message cannot be transmitted to all the recipients at that moment, a new attempt to transmit the message is made later. This can be done for example in a manner that when a new person logs into the wireless local area network, a check is performed in the message service center 10 whether any messages addressed to the person are currently stored in the storage means 14 of the message service center. In case such messages are found, the messages are transmitted to the wireless terminal 3' of the person who is logged in the wireless local area network. Thus, the person detects that a message has arrived and can subsequently read the contents of the message.

In this second preferred embodiment of the invention a validity time can also be determined for the message, wherein the short message service center 10 checks, at regular intervals, in the stored messages whether the message will still be kept valid, or whether it will be removed, regardless of whether it has been transmitted to all the recipients or not. It is also possible to determine in the message whether a reply is requested. In doing so, the recipient of the message is informed upon arrival of the message also that a reply for the message is requested. Thus, the reply message can be transmitted either by using message transmission methods known as such, such as e-mail, or the message can be transmitted using the method according to the invention, by transmitting the message to the message service center, where it is stored. Subsequently, when the sender of the original message later logs into the wireless local area network, this person is informed that a reply to the message has arrived. This reply message is further transferred, in accordance with the above-described principles, to the person's wireless terminal, wherein the person can read the reply.

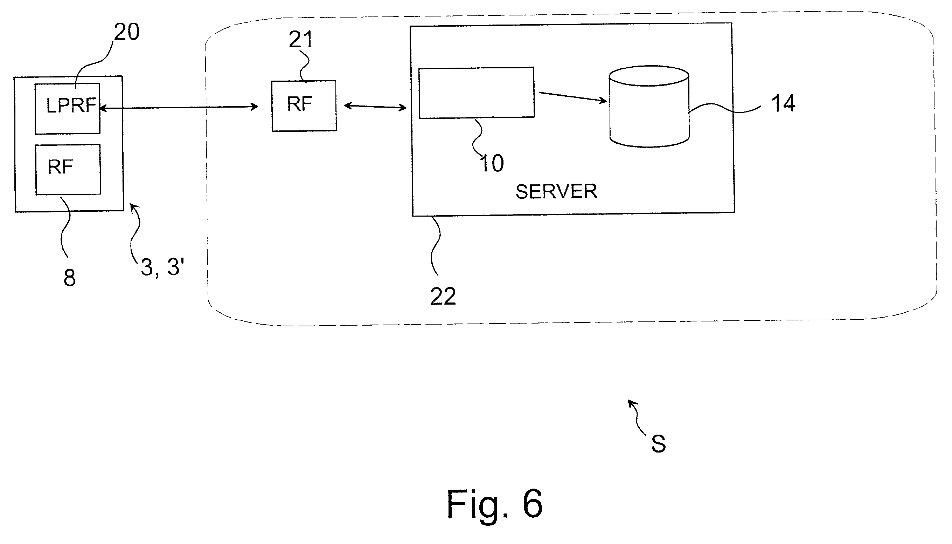

Figure 6 further shows, in a reduced chart, the structure of the location-based communication system S complying with a third preferred embodiment of the invention. In this embodiment as well, the person has a wireless communication device, a wireless terminal, or some other communication device by means of which the person can transmit and receive information wirelessly. These communication devices comprise at least wireless local communication means 20, such as low-power radio frequency (LPRF) means, for example Bluetooth. The wireless local communication means can be for example infrared communication means, such as IdDA (Infrared Data Association) means, inductive local communication means, or the like. The location-based communication system comprises, also in this embodiment, a message service center 10, and storage means 14 for storing messages. The message service center 10 is also provided with wireless local communication means 21 by means of which the message service center and the communication devices can communicate with each other. The message service center 10 is arranged for example in connection with a shop, a restaurant, a hotel, or the like. The shopkeeper can thus store into the storage means a message, such as an advertisement, a notice of special offers, or the like, and mark in the message to whom the message is intended to be transmitted. The message can be regarded to be transmitted for example to all the passers-by. The message transmission can in this third preferred embodiment of the invention be implemented for example in the following manner. The message service center 10 transmits search requests with the local communication means 21 at regular intervals. If such a communication device 3' that has corresponding wireless local communication means 20 is found in the vicinity, the communication device transmits a reply message. Next, the message service center 10 searches whether any messages intended to be transmitted to the recipient are stored in the system. In case one or more such messages are found, the messages are transmitted. In order to transmit the message, the message service center 10 retrieves the message from the storage means 14, converts it into a message that can be transmitted by means of the wireless local communication means 21 to the communication device 3'. The transmitted message is received in the communication device 3', the information contained in the message is communicated, and the person carrying a communication device is informed of the message that has arrived. Subsequently, the person can read the message by using the user interface of the communication device, which is already earlier described in this specification.

The system according to a third preferred embodiment of the present invention is particularly applicable to local communication applications. The message service center can be advantageously arranged in connection with the other data processing apparatus 22 of the shop, wherein in order to implement the system, the local communication means 21 and a software for implementing the functions of the message service center are added in the data processing apparatus. In addition, the invention can be applied at a larger scale, wherein for example the shops of a certain store chain are provided with a message service center as well as wireless local communication means. Further, this kind of system comprises a server, which is arranged to communicate with the message service centers. Thus, a server is utilized in the transmission of such information, such as advertisements, which are intended to be used in connection with all the shops of the store chain in question. On the other hand, such a broader system can be implemented by using one message service center, wherein the local shops of the store chain are provided with wireless local communication means as well as means for setting up a connection with the message service center. Thus, the messages to be transmitted are stored in the storage means or the like of said one message service center, and the recipients of the message are searched by means of wireless local communication means arranged in connection with the shops.

Further, the operation of the method according to a preferred embodiment of the invention will be described in the following. In this embodiment the person 1 creates also a location-based message and transmits it to the wireless communication device 3' of one or more recipients. The storage location is in this embodiment the wireless communication device 3' of the recipient. Thus, the transmission of the message is initiated from the communication device of the first person 1, substantially immediately after the person 1 has created the message and determined the information necessary for the transmission of the message. The message is transferred from the wireless communication device 3 to the location-based communication system S. Subsequently, an attempt is made to transmit the message to the wireless communication device 3' of one or more recipients determined in the message. After the message has been transmitted to the wireless communication device 3' of the recipient, the message is stored into the memory means 24 of this communication device 3'. Additionally, positioning is performed in this communication device 3' of the recipient, and the location of the wireless communication device 3' is compared to the location data included in the message. If the comparison indicates, that said wireless communication device 3' is located in a place within the transmission range of a message stored in said wireless communication device, the user of this wireless communication device 3' is informed of said message. In this embodiment the wireless communication device 3' of the recipient is used as the storage location of the location-based message, but the user is informed of this kind of location-based message that has arrived to the device only when the wireless communication device 3' is within the range determined for the message.

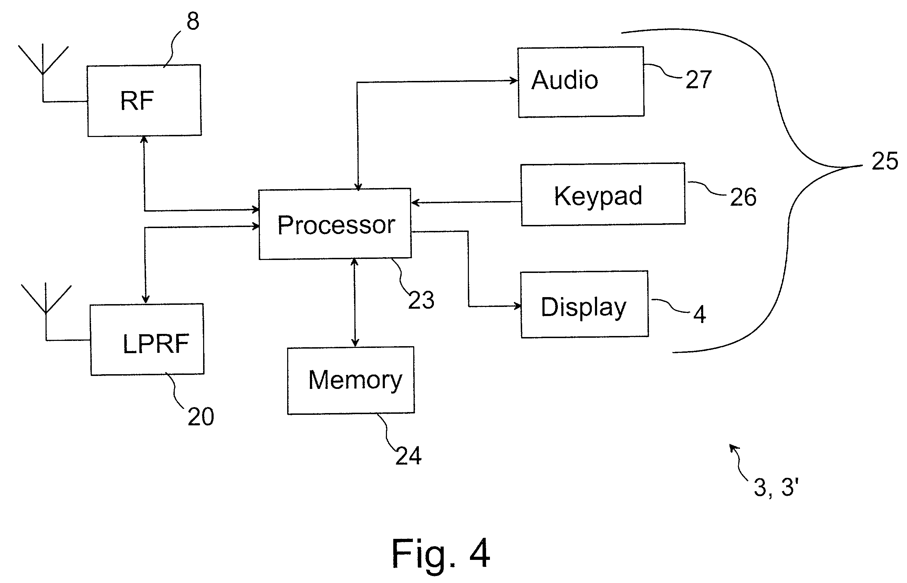

Figure 4 further shows the structure of a wireless communication device 3, 3' complying with a preferred embodiment of the invention, in a reduced block chart. The wireless communication device 3, 3' comprises one or more processors 23 for controlling the functions of the wireless communication device. In order to store the program code of the processor 23 and the information necessary in the operation, the wireless communication device 3, 3' is further provided with memory 24. The wireless communication device 3, 3' is provided for example with a radio part 8 and/or wireless local communication means 20 in order to implement the communication with the communication system S (Fig. 2). The radio part 8 comprises preferably radio communication means according to some mobile communication system. The wireless communication device 3, 3' further contains a user interface 25 comprising a display 4 for visual presentation, a keypad 26, *inter alia* for writing messages, and possibly also audio apparatus 27, such as an earpiece and a microphone (not shown). However, it is obvious that all the wireless communication devices 3, 3' used in the system S are not necessarily identical with each other, but their properties can vary to some extent. The functions complying with the present invention can, in view of the wireless communication device 3, 3', be largely implemented by program commands in the software of the processor 23.

Even though the description of the invention has been exemplified above mostly by using a text message, it is obvious that the message can, in addition or instead of text, contain also other information, such as audio information, picture information, and/or video information.

It is obvious that the present invention is not limited solely to the above-presented embodiments, but it can be modified within the scope of the appended claims.

## Claims

1. A method for transmitting a location-based message (6), wherein for the message at least one recipient (2) is defined, and the message is transmitted from a wireless communication device (3) of a sender (1) to a wireless communication device (3') of one or more said recipients (2), **characterized in that** the method comprises at least the following steps:
- a positioning step for positioning the sender's wireless communication device (3),
- a range definition step for defining the message transmission range,
- a detection step for detecting whether the recipient of the message is located within the message transmission range, and
- a presentation step, wherein the message is presented in the wireless communication device (3') of the recipient (2), in case said recipient of the message is located within the message transmission range.

2. The method according to claim 1, **characterized in that** a limited group of recipients is defined as the recipient (2) of the message.

3. The method according to claim 1, **characterized in that** anyone located within the message transmission range is defined as the recipient (2) of the message.

4. The method according to any of the claims 1 to 3, **characterized in that** a validity period for the message is also defined in the method.

5. A method according to any of the claims 1 to 4, in which messages are transmitted in at least one wireless communication system (S), **characterized in that** said communication system (S) is provided with at least one data base (14) into which the messages to be transmitted are stored at said storage step.

6. The method according to any of the claims 1 to 5, **characterized in that** the location-based message is stored into the recipient's wireless communication device (3') to be presented in said presentation step.

7. The method according to any of the claims 1 to 6, in which the sender's (1) wireless communication device (3) comprises a mobile communication device of a mobile communication system, and in which mobile communication system at least one base station is used in order to arrange communication between the wireless communication device (3) and the mobile communication system, **characterized in that** in said positioning step the sender is positioned on the basis of said base station.

8. The method according to claim 7, **characterized in that** the message transmission range is defined to be that area of the base station within which the wireless communication device (3) of the sender (1) communicates.

9. The method according to claim 7, **characterized in that** the message transmission area is defined to be the area of all those base stations transmitting a signal that can be received by the sender's (1) wireless communication device (3).

10. The method according to any of the claims 1 to 9, **characterized in that** the positioning of the sender is performed by using a satellite positioning system.

11. The method according to any of the claims 1 to 10, in which a communication connection is set up from the sender's wireless communication device (3) to a wireless local area network, **characterized in that** the sender is positioned by using the wireless local area network.

12. The method according to any of the claims 1 to 11, in which the sender's wireless communication device (3) comprises wireless local communication means (20), **characterized in that** the sender is positioned by using said wireless local communication means (20).

13. The method according to any of the claims 1 to 12, **characterized in that** a certain geographical area is defined as the message transmission range.

14. The method according to any of the claims 1 to 13, **characterized in that** said detection step is repeated at intervals.

15. The method according to any of the claims 1 to 14, **characterized in that** said detection phase is performed upon setting up a communication connection between the recipient's (2) wireless communication device (3') and the base station.

16. A system for transmitting a location-based message (6), which system comprises means (26) for determining the recipient (2) of the message, and means for transmitting the message (6) from a sender's (1) wireless communication device (3) to a wireless communication device (3') of one or more said recipients (2), **characterized in that** the system further comprises at least:
- positioning means (7, 12, 20) for positioning the sender's wireless communication device (3),
- range definition means (26) for defining the message transmission range,
- detection means (10, 12, 17, 21) for detecting whether the recipient of the message is located within the message transmission range, and
- presentation means for presenting the message in the recipient's wireless communication device (3'), in case said recipient of the message is located within the message transmission range.

17. The system according to claim 16, **characterized in that** it further comprises means (10, 14) for detecting the validity time of the message.

18. The system according to claim 16 or 17 comprising at least one mobile communication system comprising at least one base station (12) for setting up a communication connection between the wireless communication device (3) and the mobile communication system, **characterized in that** the system comprises means for positioning the sender on the basis of at least one said base station (12).

19. The system according to any of the claims 16,17 or 18 comprising a satellite positioning system, **characterized in that** the system comprises means for positioning the sender by means of said satellite positioning system.

20. The system according to any of the claims 16 to 19 comprising a wireless local area network (17, 18, 19), **characterized in that** the system comprises means for positioning the sender by means of said wireless local area network (17, 18, 19).

21. The system according to any of the claims 16 to 20 comprising wireless local communication means (20), **characterized in that** the system comprises means for positioning the sender by means of said wireless local communication means (20).

22. A message service center (10) comprising means for transferring a message (6) transmitted from the sender's (1) wireless communication device (3) to a wireless communication device (3') of one or more said recipients (2), **characterized in that** the message service center (10) comprises at least:
- positioning means (12, 17, 21) for positioning the sender's wireless communication device (3),
- means (14) for determining the message transmission range from the message to be transmitted,
- detection means (10, 12, 17, 21) for detecting whether the recipient of the message is located within the message transmission range, and
- presentation means for presenting the message in the recipient's wireless communication device (3'), in case said recipient of the message is located within the message transmission range.

23. A wireless communication device (3), comprising means (26) for determining the recipient (2), and means for transmitting a location-based message (6) from a wireless communication device (3) to a communication system (S) to be transmitted to a wireless communication device (3') of one or more said recipients (2), **characterized in that** the wireless communication device (3) further comprises at least range definition means (26) for defining the message transmission range.

24. A wireless communication device (3'), comprising means (8, 20) for receiving from a sender's (1) wireless communication device (3) a location-based message (6) in which the recipient of the message has been defined, **characterized in that** the wireless communication device (3') further comprises:
- storage means (24) for storing said message,
- detection means (7, 8, 20, 23) for detecting whether the recipient of the message is located within the message transmission range, and
- presentation means (4, 27) for presenting the message in the wireless communication device (3'), in case said recipient of the message is located within the message transmission range.
